# EUROPÄISCHE PATENTSCHRIFT

(11) **EP 3 596 291 B1**
(45) Veröffentlichungstag und Bekanntmachung des Hinweises auf die Patenterteilung: **28.04.2021**
(21) Anmeldenummer: 18721940.7
(22) Anmeldetag: 02.03.2018
(51) Int. Cl.: E05B 15/00, E05B 81/30, E05B 81/44

(54) **STELLANTRIEB FÜR KRAFTFAHRZEUGTECHNISCHE ANWENDUNGEN**
ACTUATING DRIVE FOR MOTOR VEHICLE APPLICATIONS
ENTRAÎNEMENT DE RÉGLAGE POUR APPLICATIONS DANS LE DOMAINE TECHNIQUE DE L'AUTOMOBILE

(30) Priorität: 16.03.2017 DE 102017105657
(43) Veröffentlichungstag der Anmeldung: 22.01.2020
(73) Patentinhaber: Kiekert AG, 42579 Heiligenhaus (DE)
(72) Erfinder: STURM, Christian, 47804 Krefeld (DE); TÖPFER, Claus, 71063 Sindelfingen (DE)
(86) Internationale Anmeldenummer: PCT/DE2018/100187
(87) Internationale Veröffentlichungsnummer: WO 2018/166558

(56) Entgegenhaltungen:
- EP-A2- 1 785 560
- WO-A1-2012/139544
- DE-A1-102008 011 545
- JP-A- H09 273 341
- US-A1- 2002 089 188

## Beschreibung

Die Erfindung betrifft einen Stellantrieb gemäß dem Oberbegriff des Anspruchs 1 für kraftfahrzeugtechnische Anwendungen, insbesondere für ein Kraftfahrzeugschloss mit diesem Stellantrieb, zur Realisierung verschiedener Funktionsstellungen.

DE 10 2015 113 122 A1 beschreibt einen Stellantrieb für kraftfahrzeugtechnische Anwendungen, insbesondere für ein Kraftfahrzeugschloss mit einem Stellantrieb, zur Realisierung verschiedener Funktionsstellungen. Dort kommt ein elektromagnetischer Rotationssteller zum Einsatz, wobei der elektromotorische Rotationssteller einen Stator mit einer Spulenanordnung und ein magnetisierbares Rotorelement umfasst. Der offenbarte berührungslos arbeitende Rotationssteller erzeugt eine Rotationsbewegung mittels magnetischer Felder, die mittels Spulen auf einem U-förmigen Stator erzeugt werden. Durch eine Anordnung mehrerer Spulen ist dabei ein unterschiedlich ausgerichtetes magnetisches Feld erzielbar. Das Rotorelement umfasst dabei einen magnetisierbaren Rotor, wobei der Rotor in Bezug auf das erzeugte magnetische Feld der Spulenanordnung ausrichtbar ist. Das Rotorelement umfasst dabei eine Wellenanordnung, auf der eine Anzahl von Nocken ausgebildet sind, mittels derer unterschiedliche Stellbewegungen mittels der Stelleinheit erzielbar sind. Wird die Stelleinheit beispielsweise für ein Kraftfahrzeugschloss eingesetzt, so können mittels der Nocken und/oder zusätzlicher Hebelanordnungen unterschiedliche Einstellungen im Kraftfahrzeugschloss eingestellt werden. Als Einstellung kommen dabei beispielsweise ein elektrisches Öffnen, ein Verriegeln, ein Diebstahlsichern oder ein Kindersichern in Frage. Das Rotorelement wird mittels der induzierten Magnetfelder um seine Achse herum ausgerichtet, so dass verschiedene Funktionsstellungen des Rotorelements realisierbar sind. Zur Stabilisierung des Rotorelements weist der Stellantrieb Rastmittel auf, bei denen federbelastete Hebel mit den Nocken an der Abtriebswelle des Rotorelements zusammenwirken, so dass stabile Funktionsstellungen erzielbar sind. Jeder Nocken ist als Rastnocken ausgebildet und verfügt zu diesem Zweck über eine Ausnehmung, in welche eine Nase an dem zugehörigen Hebel eingreift, sobald der Nocken die gewünschte Funktionsstellung gegenüber dem Hebel erreicht. Auf diese Weise wird zwischen dem Hebel einerseits und dem Nocken andererseits ein lösbarer Rastverbund beim Erreichen der Funktionsstellung realisiert. Jeder Hebel wird mithilfe einer Feder beaufschlagt. Die Kraft der Feder ist so gerichtet, dass der Hebel mit seiner Nase in Richtung auf die Achse der Abtriebswelle gedrückt wird.

Eine weitere kraftfahrzeugtechnische Anwendung und insbesondere ein Kraftfahrzeugschloss mit einem elektromagnetisch wirkenden Stellmittel ist aus der DE 10 2012 003 698 A1 bekannt geworden. Ein als Rotorwelle ausgebildeter Permanentmagnet ist drehbeweglich in einer Spulenanordnung aufgenommen, wobei mittels der Spulenanordnung Magnetfelder erzeugbar sind und die Rotorwelle mittels der Magnetfelder in verschiedene Funktionsstellungen ausrichtbar ist. Durch die Anordnung von Spulenpaaren ist dabei die Möglichkeit gegeben, die Rotorwelle und ein an die Rotorwelle angeordnetes Stellelement auszurichten. Durch die mittels der Spulenanordnungen erzeugten homogenen magnetischen Felder kann das Rotorelement in unterschiedliche Funktionsstellungen, wobei auch Zwischenstellungen ermöglicht werden, verbracht werden. Die Steuerschaltung für die Spulenanordnungen sind als Treiberschaltungen und insbesondere als Halbbrücken ausgebildet, wobei die Steuerschaltung derart ausgelegt ist, dass eine stationäre Bestromung erfolgt. Dies bedeutet, dass in Anfahren der Antriebsstellungen, die den entsprechenden Steuerstellungen des Stellelements entsprechen, ohne die Notwendigkeit eines Endanschlags oder dergleichen erfolgen kann. Die Treiberschaltung ist als H-Brückenschaltung ausgebildet und kommt mit herkömmlichen Schaltern, insbesondere integrierten Halbleiterschaltern aus. Auf einen für übliche Elektromotoren benötigten Kommutator kann somit verzichtet werden.

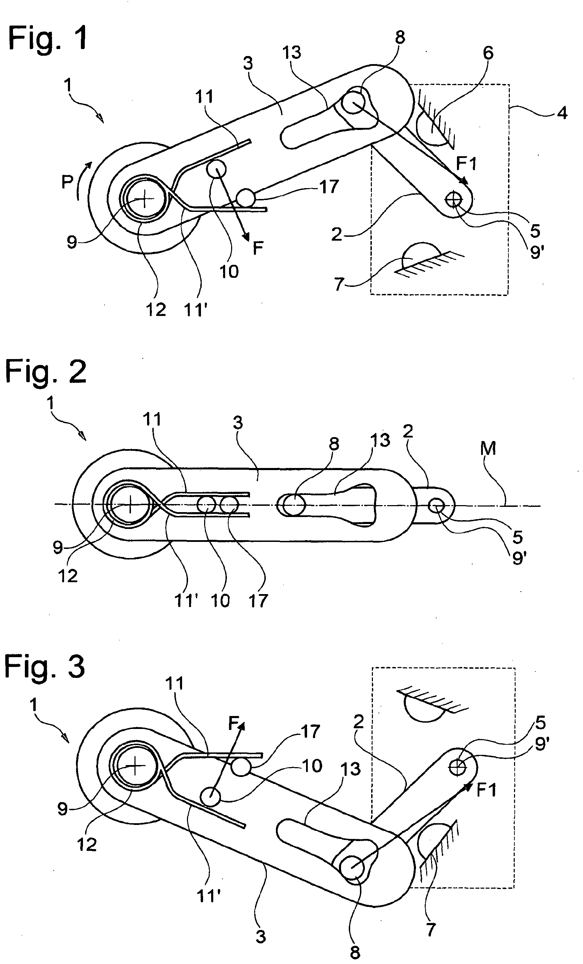

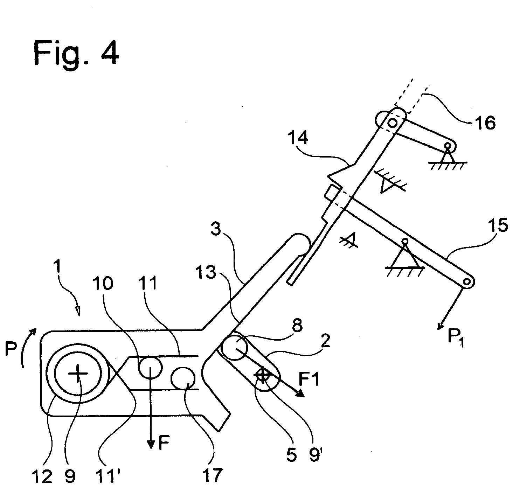

EP 1 785 560 A2 bildet die Basis für den Oberbegriff des Anspruchs 1 und beschreibt einen Antriebsmechanismus 110 für ein Motorschloss einer Fahrzeugtür und zeigt in seinen FIG. 3 und 4 eine zweite Ausführungsform. In dieser zweiten Ausführungsform umfasst der Antriebsmechanismus 110 einen Elektromotor 112 mit einer Welle 118, einen Antriebshebel 142 und einen Schalthebel 138. Der Antriebshebel 142 ist mittels des Elektromotors 112 in zwei Funktionsstellungen A, B bringbar. Der Antriebshebel 142 wirkt mit dem Schalthebel 138 derart zusammen, dass nach einem Erreichen der zweiten Funktionsstellung B mittels des Schalthebels 138 ein Moment in den Antriebshebel 142 einleitbar ist. Der Antriebshebel 142 ist an einem ersten Ende 142A um eine ortsfeste erste Achse schwenkbeweglich aufgenommen. Der Schalthebel 138 ist an einem ersten Ende 138A um eine verschiebbare zweite Achse 139 schwenkbar gelagert. Die zweite Achse 139 ist in einem Schlitz 140 verschiebbar gelagert, der auf einer Geraden durch die beiden Achsen verläuft. Das zweite Ende 142B des Antriebshebels 142 ist mit dem zweiten Ende 138B des Schalthebels 138 schwenkbar verbunden, sodass Antriebshebel 142 und Schalthebel 138 einen Kniehebel bilden. Eine Schraubenfeder 120 greift an den beiden zweiten Enden 138B, 142B an und spannt den Kniehebel in seine gestreckte Stellung (FIG. 4) vor, die der zweiten Funktionsstellung B entspricht. In der gestreckten Stellung des Kniehebels wird mittels des Schalthebels 138 auf das erste Ende 142A des Antriebshebels 142 eine Kraft übertragen, die von der zweiten Achse 139 genau auf die erste Achse wirkt. Eine Schnecke 116 ist drehfest auf der Welle 118 befestigt. Das erste Ende 142A des Antriebshebels 142 bildet ein Schneckenrad 144, dessen Zähne 146 mit der Schnecke 116 kämmen. Wenn der Kniehebel seine gestreckte Stellung hin zu einer nach oben geknickten Stellung (FIG.3) verlassen soll, dann wird der Elektromotor 112 in einer ersten Drehrichtung betrieben, wodurch der Antriebshebel 142 um die erste Achse derart geschwenkt wird, dass sein zweites Ende 142B sich nach oben bewegt und die Schraubenfeder 122 zusammendrückt. Dabei nimmt das zweite Ende 142B des Antriebshebels 142 das zweite Ende 138B des Schalthebels 138 mit, sodass der Schalthebel 138 um die zweite Achse 139 geschwenkt wird und sein erstes Ende 138A in dem Schlitz 140 näher zu der ersten Achse hin geschoben wird. Wenn der Kniehebel seine gestreckte Stellung aus einer nach oben geknickten Stellung erreichen soll, dann wird der Elektromotor 112 in einer entgegengesetzten zweiten Drehrichtung betrieben, wodurch der Antriebshebel 142 um die erste Achse derart geschwenkt wird, dass sein zweites Ende 142B sich nach unten bewegt und die Schraubenfeder 122 entspannt wird. Dabei nimmt das zweite Ende 142B des Antriebshebels 142 das zweite Ende 138B des Schalthebels 138 mit, sodass der Schalthebel 138 um die zweite Achse 139 geschwenkt wird und sein erstes Ende 138A in dem Schlitz 140 weiter von der ersten Achse weg geschoben wird.

US 2002 0 089 188 A1 beschreibt einen Mechanismus 148 zum Sperren und Entsperren eines Kraftfahrzeugtürschlosses 10 und zeigt in seiner FIG. 8 eine zweite Ausführungsform. In dieser zweiten Ausführungsform umfasst der Mechanismus 148 einen Motor mit einer Abtriebswelle, einen ersten Hebel 150 und einen zweiten Hebel 152. Der zweite Hebel 152 ist mit der Abtriebswelle verbunden und mittels des Motors in zwei Funktionsstellungen (in FIG. 8 mit durchgezogenen beziehungsweise gestrichelten Linien dargestellt) bringbar. Der zweite Hebel 152 wirkt mit einer Torsionsfeder 174 derart zusammen, dass nach einem Erreichen der ersten Funktionsstellung (in FIG. 8 mit durchgezogenen Linien dargestellt) mittels der Torsionsfeder 174 ein diese Funktionsstellung stabilisierendes Moment in den zweiten Hebel 152 einleitbar ist. Der zweite Hebel 152 ist an einem ersten Ende um eine ortsfeste erste Achse 154 schwenkbeweglich aufgenommen. Der erste Hebel 150 ist an einem ersten Ende um eine verschiebbare zweite Achse 118 schwenkbar gelagert. Die zweite Achse 118 ist auf einer Geraden verschiebbar gelagert, die durch die beiden Achsen 154, 118 verläuft. Das zweite Ende des ersten Hebels ist mit dem zweiten Ende des zweiten Hebels schwenkbar verbunden, sodass erster Hebel 150 und zweiter Hebel 152 einen Kniehebel bilden. Die Torsionsfeder 174 greift an dem ersten Ende des zweiten Hebels 152 an und spannt den Kniehebel in seine nach links geknickte Stellung vor, die der ersten Funktionsstellung entspricht. Wenn der Kniehebel seine nach links geknickte Stellung hin zu seiner nach rechts geknickten Stellung (in FIG. 8 mit gestrichelten Linien dargestellt) verlassen soll, dann wird der Motor derart betrieben, dass der zweite Hebel 152 um die zweite Achse 154 derart geschwenkt wird, dass sein zweites Ende sich nach rechts bewegt. Dabei nimmt das zweite Ende des zweiten Hebels 152 das zweite Ende des ersten Hebels 150 mit, sodass der erste Hebel 150 um die erste Achse 118 geschwenkt wird und sein erstes Ende zunächst weiter von der zweiten Achse 154 weg und dann - nach Erreichen der gestreckten Stellung des Kniehebels - wieder näher zu der zweiten Achse 154 hin geschoben wird. Wenn der Kniehebel seine nach links geknickte Stellung aus seiner nach rechts geknickten Stellung erreichen soll, dann wird der Elektromotor derart betrieben, dass der zweite Hebel 152 um die zweite Achse 154 derart geschwenkt wird, dass sein zweites Ende sich nach links bewegt. Dabei nimmt das zweite Ende des zweiten Hebels 152 das zweite Ende des ersten Hebels 150 mit, sodass der erste Hebel 150 um die erste Achse 118 geschwenkt wird und sein erstes Ende zunächst weiter von der zweiten Achse 154 weg und dann - nach Erreichen der gestreckten Stellung des Kniehebels - wieder näher zu der zweiten Achse 154 hin geschoben wird.

DE 10 2008 011 545 A1 beschreibt einen Kraftfahrzeugtürverschluss mit einem Hebel 1 und mit einer dem Hebel 1 zugeordneten Schenkelfeder 2 mit zwei Federschenkeln 2a. Die Schenkelfeder 2 wirkt mit einer zugehörigen Kontur 4 zur zusammengesetzten Bildung einer bistabilen Positionssicherungseinheit 2, 4 zusammen. Die Schenkelfeder 2 ist an einem Schlosskasten und die Kontur 4 am Hebel 1 angeordnet. Beide Federschenkel 2a wechselwirken gemeinsam mit der Kontur 4. Die Kontur 4 ist mit zwei Ausformungen 4a zur Vorspannung der daran anliegenden Federschenkel 2a ausgerüstet. Die Federschenkel 2a liegen in beiden bistabilen Endlagen des Hebels 1 durchgängig an ihrer jeweils zugehörigen Ausformung 4a a und ein bilden Wechselwirkungspaar 2a, 4a. Der Hebel 1 ist drehbar um eine Achse A gelagert. Die Schenkelfeder 2 ist ortsfest gegenüber der Kontur 4 angeordnet und erzeugt zusammen mit der Kontur 4 eine resultierende Kraftkomponente FR, welche den Hebel 1 in seiner einen Endlage (FIG. 2) im Gegenuhrzeigersinn und in seiner anderen Endlage (FIG. 1) im Uhrzeigersinn bezogen auf seine Achse A beaufschlagt.

DE 10 2007 055 413 A1 beschreibt ein nach Art eines Türschlosses ausgebildetes Schließsystem 1 für ein Kraftfahrzeug 2 und zeigt in seiner FIG. 3 eine dritte Ausführungsform. In dieser dritten Ausführungsform umfasst das Schließsystem 1 ein bewegliches Bauteil 4 und ein Federelement. Zwei Exzenterabschnitte 11 sind am Bauteil 4 vorgesehen, die entlang einer Bewegungsbahn 16 zwischen zwei stabilen Endpositionen (in FIG. 3 mit gestrichelten Linien dargestellt) und einer stabilen Zwischenposition (in FIG. 3 mit durchgezogenen Linien dargestellt) verschwenkt werden. Das Federelement 3 ist an zwei Stellen 13, 14 des Schließsystems 1 so fixiert, dass das Federelement 3 während einer Bewegung der Exzenterabschnitte 11 entlang der Bewegungsbahn 16 auslenkbar ist. Das bewegliche Bauteil 4 weist Antriebsmittel 6 auf. Das Federelement 3 ist länglich ausgebildet. Die stabile Zwischenposition liegt zwischen den stabilen Endpositionen. In der Zwischenposition lenken die Exzenterabschnitte 11 das Federelement 3 aus. In jeder Endposition ist das Federelement 3 nicht ausgelenkt.

Der Stand der Technik kann nicht in allen Aspekten überzeugen. So ist es beispielsweise wichtig, insbesondere bei einem Einsatz eines Stellantriebs in einer kraftfahrzeugtechnischen Anwendung und bevorzugt in einem Kraftfahrzeugschloss, dass die verschiedenen Funktionsstellungen präzise angefahren werden können und eine dauerhafte Funktionsstellung sicher einnehmen können. Diese Problematik stellt sich insbesondere bei einer Verwendung eines elektromagnetischen Stellelements, das ohne Anschläge ausgebildet ist, da einerseits eine Dauerbestromung der Spulenanordnungen notwendig ist und darüber hinaus von außen auf das Stellelement einwirkende Kräfte lediglich das magnetische Feld überwinden müssen, um das Rotorelement bzw. Stellelement aus der Funktionsstellung herauszubewegen. Wird mit einem lösbaren Rastverbund, zum Beispiel einem Nocken und einem federbelasteten Hebel eine sichere Funktionsstellung erzielt, so muss bei einem Herausbewegen des Rotorelementes aus der Funktionsstellung zusätzlich der lösbare Rastverbund überwunden werden.

Der Erfindung liegt das technische Problem zugrunde, einen Stellantrieb für kraftfahrzeugtechnische Anwendungen so weiter zu entwickeln, dass mit möglichst geringem baulichen Aufwand die einzelnen Funktionsstellungen reproduzierbar und definiert vorgegeben und beibehalten werden.

Die Lösung dieses Problems und somit der Aufgabe der Erfindung erfolgt durch die Merkmale des unabhängigen Patentanspruchs 1. Vorteilhafte Ausgestaltungen der Erfindung sind in den Unteransprüchen angegeben. Es wird darauf hingewiesen, dass die im Folgenden beschriebenen Ausführungsbeispiele nicht beschränkend sind, es sind vielmehr beliebige Variationsmöglichkeiten der in der Beschreibung, den Unteransprüchen und den Zeichnungen beschriebenen Merkmale möglich, wobei der Schutzbereich der Erfindung nur durch die abhängigen Ansprüche definiert wird.

Gemäß dem Patentanspruch 1 wird die Aufgabe der Erfindung dadurch gelöst, dass ein Stellantrieb für kraftfahrzeugtechnische Anwendungen, insbesondere für ein Kraftfahrzeugschloss mit einem Stellantrieb, zur Realisierung verschiedener Funktionsstellungen bereitgestellt wird, aufweisend
- einen elektromotorischen Rotationssteller mit einem Rotor und einem Ständer, insbesondere einem Spulenträger;
- einen Antriebshebel, wobei der Antriebshebel mittels des Rotationsstellers in verschiedene Funktionsstellungen bringbar ist;
- einen Schalthebel;
wobei
- der Antriebshebel mit dem Schalthebel derart zusammenwirkt, dass nach einem Erreichen einer der Funktionsstellungen mittels des Schalthebels ein Moment in dem Antriebshebel einleitbar ist;
- der Antriebshebel um eine erste Achse schwenkbeweglich aufgenommen ist;
- der Schalthebel um eine zweite Achse schwenkbar gelagert ist;
- der Schalthebel zum Verrasten des Antriebshebels in der Funktionsstellung ausgebildet ist;
- das mittels des Schalthebels in den Antriebshebel einleitbare Moment die Funktionsstellung stabilisiert;
- der Antriebshebel einen Führungsnocken aufweist;
- der Schalthebel eine Führungskontur aufweist;
- der Führungsnocken mit der Führungskontur in Eingriff steht;
- wobei der Antriebshebel in der Funktionsstellung mit einem Anschlag zusammenwirkt.

Durch die erfindungsgemäße Ausbildung des Stellantriebs ist nun die Möglichkeit geschaffen, einerseits eine stabile und mittels des zusätzlichen Moments dauerhaft sichere Funktionsstellung mittels des Stellantriebs zu realisieren und andererseits ein leichtes Positionieren des Rotorelements in Bezug auf den Antriebshebel bereitzustellen. Insbesondere wird der Antriebshebel direkt angetrieben, so dass keine zusätzlichen Rastmittel notwendig sind, um eine Funktionsstellung des Antriebshebels in einer sicheren Positionierung zu ermöglichen.

Der Stellantrieb für kraftfahrzeugtechnische Anwendungen kann zur Realisierung verschiedener Funktionsstellungen eines Stellmittels zum Einsatz kommen. So sind Verriegelungen von Fächern oder Klappen möglich, das Anzeigen von Funktionsstellungen wir beispielsweise verriegelt oder entriegelt, der Einsatz des Stellantriebs als Mittel zum Öffnen, beispielsweise einer Klappe oder Tür, und bevorzugt der Einsatz in einem Kraftfahrzeugschließsystem. In einem Kraftfahrzeugschließsystem kann das Stellmittel zum Beispiel unmittelbar den Antriebshebel bewegen und somit ein elektrisches Öffnen, ein Verriegeln, ein Diebstahlsichern, ein Kindersichern oder vergleichbare Funktionen im Kraftfahrzeug einstellen. Als Funktionsstellung ist dann die Endlage des Antriebshebels beschrieben, wobei sich zum Beispiel das Kraftfahrzeugschloss in einer verriegelten Stellung befindet. Durch ein Betätigen des Stellantriebs kann dann der Antriebshebel in eine weitere Funktionsstellung verbracht werden, in der das Kraftfahrzeugschloss dann beispielsweise entriegelt vorliegt.

Der elektromotorische Rotationssteller weist einen als U-förmig beschreibbaren Spulenkörper auf, der bevorzugt einem weichmagnetischen Kern aufweist und als Spulenträger dient. Die Spulenwicklungen sind modular, zum Beispiel als separate Bauelemente, zum Beispiel aus Spulenträger und Wicklung aufgebaut, und auf dem Spulenkörper angeordnet. Dabei können die Spulen derart bestromt werden, dass ein magnetisches Feld erzeugbar ist. Je nach Stromrichtung in den Spulenwicklungen kann dabei eine unterschiedliche Polarisierung des Plusleitelementes bzw. des Spulenkörpers erfolgen. Bevorzugt ist das Rotorelement des Rotationsstellers drehbeweglich und bevorzugt auf einer Welle im Spulenträger angeordnet. Dabei kann das Rotorelement auf einem diametral magnetisierten Permanentmagneten vorliegen, wobei sich der Permanentmagnet unter Erzielung eines möglichst geringen Spaltmaßes an den Spulenkörper bzw. das Plusleitelement anfügt. Das Rotorelement bzw. der Permanentmagnet ist dann drehbeweglich in Richtung des polarisierten Flussleitelements bzw. des Spulenträgers ausrichtbar.

Je nach Stromrichtung und Polarisierung des Flussleitelementes ist dann eine Ausrichtung des Rotorelements parallel zum Flussleitelement erzeugbar. Das Flussleitelement kann dabei unmittelbar als Spulenträger und Ständer des elektromagnetischen Rotationsstellers dienen. Der Rotor selbst wird zu aus dem Permanentmagneten und der den Permanentmagneten tragenden Welle gebildet. Somit ist ein elektromagnetischer Rotationssteller erzielbar, der zumindestens zwei unterschiedliche Funktionsstellungen einnehmen kann. Je nach Anzahl der Spulenträger und Spulenwicklungen können aber auch mehrere Funktionsstellungen mittels des elektromagnetischen Rotationsstellers eingenommen werden.

Unmittelbar mit dem Rotationssteller und/oder der Welle des Rotors drehbar ist ein Antriebshebel angeordnet, der zur Übertragung des elektromagnetisch erzeugten Drehmoments auf einem Schalthebel dient. Der Antriebshebel kann dabei als Hebel mit einem Hebelarm, aber auch zum Beispiel als Exzenterelement, bevorzugt Exzenterscheibe, ausgebildet sein. Mittels des Rotationsstellers erzeugten Stellbewegung in die unterschiedliche Funktionsstellung kann der Antriebshebel dann in unterschiedliche Funktionsstellungen verfahren werden.

Der Antriebshebel wiederum steht mit einem Schalthebel im Eingriff. Dabei wirkt der Antriebshebel mit dem Schalthebel derart zusammen, dass mittels des Schalthebels und insbesondere in der Funktionsstellung ein Moment in den Antriebshebel einleitbar ist. Das Moment wirkt dabei von dem Schalthebel auf den Antriebshebel und stabilisiert die Lage des Antriebshebels in der Funktionsstellung. Mit anderen Worten kann auf eine Bestromung des elektromagnetischen Rotationsstellers in der erreichten Funktionsstellung verzichtet werden. Durch das mittels des Schalthebels in den Antriebshebel eingeleiteten Moments wird die Funktionsstellung des Antriebshebels stabilisiert. Der Antriebshebel erreicht eine stabile Funktionsstellung, so dass keine weiteren Kräfte oder. Momente mittels des Rotationsstellers in den Antriebshebel eingeleitet werden müssen, um eine sichere Positionierung des Schalthebels in der Funktionsstellung zu erzielen.

Erfindungsgemäß wirkt der Antriebshebel in der Funktionsstellung mit einem Anschlag zusammen. Der Einsatz eines Anschlags dient der weiteren Stabilisierung des Antriebshebels in der Funktionsstellung. Dabei kann der Anschlag am Rotationssteller, oder einem Gehäuse des Stellantriebs, wie beispielsweise dem Schalthebel, angeordnet sein. Wichtig für die Funktion des Anschlags ist es dabei, dass der Antriebshebel beim Erreichen des Anschlags in seine Funktionsstellung überführt ist. Die Funktionsstellung entspricht dabei der Lage des Antriebshebels, bei der der Antriebshebel am Anschlag anliegt. Der Anschlag kann dabei auch als Pufferelement, beispielsweise einem elastischen Pufferelement, ausgebildet sein.

Bevorzugt ist der Antriebshebel schwenkbar am Rotationssteller aufgenommen. Eine schwenkbare Anordnung des Antriebshebels ermöglicht ein schnelles Bewegen des Antriebshebels und somit ein schnelles Schalten bzw. Einlegen einer Funktionsstellung des Antriebshebels. Dies kann insbesondere bei Anwendungen im Kraftfahrzeugschloss vorteilhaft sein, wenn beispielsweise im Falle eines Unfalls ein Kraftfahrzeugschloss von einer entriegelten Position in eine verriegelte Position überführt werden muss. Eine schwenkbare Anordnung ist auch dann vorteilhaft, wenn der Antriebshebel beispielsweise als Exzenterscheibe ausgebildet ist, so dass mittels des Antriebshebels oder Antriebsmittels Bewegungen auf einer Kreisbahn übertragbar sind.

Wirkt das stabilisierende Moment zumindest teilweise in Richtung des Anschlags, so ergibt sich eine weitere vorteilhafte Ausgestaltungsform der Erfindung. Durch eine konstruktive Ausbildung dahingehend, dass das über den Schalthebel auf den Antriebshebel wirkende Moment kann eine Positionssicherung des Antriebshebels erzielt werden. Die Positionssicherung ist umso größer, je größer das in Richtung des Anschlags wirkende Moment ist. Dabei wirkt die Kraft aus dem Schalthebel derart auf den Antriebshebel, dass eine Zerlegung des Moments in eine erste Komponente vorliegt, die in Richtung des Lagers des Antriebshebels, insbesondere die Rotorwelle wirkt und eine zweite Komponente, die in Richtung des Anschlags wirkt. Bevorzugt ist die erste Kraftkomponente größer als die zweite Komponente. Mit anderen Worten wirkt die Hauptkraft aus dem Schalthebel in Richtung der Rotorwelle und eine im Vergleich zur ersten Komponente geringere Kraft in Richtung des Anschlags des Antriebshebels.

Wird nun der Antriebshebel von einer ersten Funktionsstellung, in der der Antriebshebel in Richtung eines ersten Anschlags mit einem in Richtung des Anschlags wirkenden Moments belastet und nach einem Verstellen des Antriebshebels in eine weitere Funktionsstellung wiederum durch ein in eine Richtung des Anschlags wirkendes Moment belastet, so ergeben sich in den Funktionsstellungen sichere Endlagen für den Antriebshebel. Durch das Zusammenspiel zwischen Schalthebel und Antriebshebel in den jeweiligen Funktionsstellungen ist die Möglichkeit geschaffen, sichere Endlagenpositionen mit mechanischen Mitteln zu erzielen. Mit anderen Worten wird ein mechanischer Flip-Flop erzeugt.

Erfindungsgemäß ist der Schalthebel schwenkbar gelagert im zum Beispiel Kraftfahrzeugschloss aufgenommen. Eine schwenkbare Lagerung ermöglicht dabei ein leichtes und konstruktiv günstiges Zusammenspiel zwischen Antriebshebel und Schalthebel. Insbesondere ist der Schalthebel mittels des Antriebshebels leicht verschwenkbar. Darüber hinaus können auch günstige Hebelverhältnisse zwischen dem Antriebshebel und dem Schalthebel einstellbar sein, so dass wiederum eine konstruktiv günstige Auslegung des elektromagnetischen Antriebs ermöglichbar ist.

Eine weitere Ausführungsform, der Erfindung ergibt sich dann, wenn der Schalthebel mittels des Antriebshebels positionierbar ist. Die schwenkbewegliche Auslegung des Schalthebels im Zusammenspiel mit dem Antriebshebel ermöglicht ein konstruktives günstiges Positionieren des Schalthebels. Insbesondere kann durch ein Zusammenspiel eines schwenkbar gelagerten Antriebshebels mit einem schwenkbar gelagerten Schalthebel ein sehr genaues, schnelles und geräuscharmes Positionieren des Schalthebels realisiert werden. Die schwenkbare Lagerung ermöglicht darüber hinaus eine konstruktiv günstige Ausgestaltungsform zur Einleitung der Kräfte des Antriebshebels auf den Schalthebel. Insbesondere kann das durch den elektromagnetischen Rotationssteller zur Verfügung gestellte Antriebsmoment optimal zur Verstellung des Schalthebels genutzt werden.

Wirkt der Schalthebel mit einem Federelement zusammen, wobei mittels des Federelementes eine Kraft in den Antriebshebel einleitbar ist, so ergibt sich eine weitere vorteilhafte Ausgestaltungsform der Erfindung. Mittels eines Federelements kann eine Positionierung des Schalthebels stabilisiert werden und/oder das Bewegen des Schalthebels in vorteilhafter Weise unterstützbar sein. In einer bevorzugten Ausführungsform wirkt das Federelement in einer Funktionsstellung derart auf den Schalthebel, dass ein Moment in Richtung des Antriebshebels erzeugbar ist. Mit anderen Worten wird mittels des Federelements eine Kraft auf den Antriebshebel erzeugt.

Ist das Federelement zum Beispiel als Mitte-Null-Feder ausgebildet, so kann mittels lediglich eines Federelements ein Moment in unterschiedliche Richtungen auf den Schalthebel erzeugt werden. Ist beispielsweise ein erster Anschlag für einen Federschenkel am Gehäuse zum Beispiel eines Kraftfahrzeugschlosses angeordnet, und ein weiterer Anschlag für einen weiteren Federschenkel des Federelements am Schalthebel angeordnet, so kann jeweils in den Funktionsstellungen ein Moment über das Federelement auf den Schalthebel übertragen werden. Mittels der Mitte-Null-Feder kann somit in jeder Funktionsstellung des Schalthebels bzw. des Antriebshebels ein zusätzliches Moment in den Antriebshebel eingeleitet werden.

In einer Ausführungsform ist der Stellantrieb Teil eines Kraftfahrzeugschlosses, wobei der Schalthebel mit einem weiteren Hebel des Schlosses, insbesondere einem Kupplungshebel, in Eingriff bringbar ist. Durch das Zusammenspiel des Schalthebels mit einem Kupplungshebel ist die Möglichkeit geschaffen, mittels des Schalthebels weitere Funktionen im Schloss, wie beispielsweise ein Verriegeln oder Entriegeln einzustellen. Natürlich ist diese Ausführungsform nicht beschränkend, sondern zeigt lediglich ein Ausführungsbeispiel auf, bei dem der Schalthebel mit einem Kupplungshebel zur Erzielung einer Einstellung des Schlosses zusammenwirkt. Mittels des Schalthebels können aber auch unmittelbar Einstellungen am Schloss vorgenommen werden oder zum Beispiel eine Linearbewegung eines Hebels initialisiert werden.

Weist der Antriebshebel zumindest bereichsweise eine insbesondere zylindrische Kontur auf, wobei der Schalthebel mittels der Kontur, zumindest bereichsweise führbar ist, so ergibt sich eine weitere Ausgestaltungsvariante der Erfindung. Durch die Ausbildung zylindrischer Eingriffsflächen bzw. mit einem Radius ausgebildeten Eingriffsflächen zwischen Schalthebel und Antriebshebel kann ein geräuscharmes Verstellen des Schalthebels erzielt werden. Neben der geräuscharmen Verstellung des Schalthebels bietet die Ausbildung zylindrischer oder mit einem Radius versehener Konturen die Möglichkeit einer gleichmäßigen Führung des Schalthebels. Insbesondere können durch die Ausbildung der Konturen unterschiedliche Kraftangriffsflächen und/oder Momente zwischen dem Antriebshebel und dem Schalthebel realisiert werden, so dass in vorteilhafter Weise einerseits ein sicheres Positionieren in den Funktionsstellungen erzielbar ist und andererseits die Kraftverhältnisse zwischen Antriebshebel und Schalthebel sehr genau aufeinander einstellbar sind. Dies bietet insbesondere dann einen Vorteil, wenn mittels des magnetischen Stellmittels unterschiedliche Kräfte vom Antriebshebel auf den Schalthebel übertragbar sind. Tatsächlich kann somit ein sehr genaues Einstellen der Eingriffsmomente zwischen Antriebshebel und Schalthebel in Abstimmung mit dem durch das elektromagnetische Rotationsstellelement vorgenommen werden. Somit ist neben einem sicheren Positionieren auch eine konstruktiv günstige Auslegung der Kräfteverhältnisse im Stellmittel erzielbar. Nachfolgend wird die Erfindung unter Bezugnahme auf die anliegenden Zeichnungen anhand eines bevorzugten Ausführungsbeispiels näher erläutert. Es gilt jedoch der Grundsatz, dass das Ausführungsbeispiel die Erfindung nicht beschränkt, sondern lediglich eine Ausgestaltungsform darstellt.

Es zeigt:
- FIG. 1: eine prinzipielle Darstellung eines Stellantriebs in einer stabilisierten ersten Funktionsstellung,
- FIG. 2: eine prinzipielle Darstellung eines Stellantriebs in einer Mittelstellung,
- FIG. 3: eine prinzipielle Darstellung eines Stellantriebs in einer stabilisierten zweiten Funktionsstellung,
- FIG. 4: eine prinzipielle Darstellung eines Stellantriebs für eine kraftfahrzeugtechnische Anwendung bestehend aus Antriebshebel und Schalthebel.

In der FIG. 1 ist ein Stellantrieb 1 für eine kraftfahrzeugtechnische Anwendung in einer prinzipiellen Darstellung wiedergegeben. Der Stellantrieb 1 weist einen Antriebshebel 2 und einen Schalthebel 3 als wesentliche Bestandteile auf. Ein elektromagnetischer Rotationssteller 4 ist lediglich als gestrichelte Linie angedeutet dargestellt. An dem elektromagnetischen Rotationssteller 4 und insbesondere an einer Rotorwelle 5 des elektromagnetischen Rotationsstellers 4 ist der Antriebshebel 2 um eine erste Achse 9', nämlich die Achse 9' der Rotorwelle 5, schwenkbeweglich befestigt. Der Antriebshebel 2 ist insbesondere mittels der Rotorwelle 5 aus der in der FIG. 1 dargestellten Position im Gegenuhrzeigersinn verfahrbar. Der Antriebshebel 2 liegt gegen einen Anschlag 6 an und kann in Richtung des Gegenuhrzeigersinns gegen einen weiteren Anschlag 7 verschwenkt werden. Der Antriebshebel 2 wiederum weist einen als zylindrisch beschreibbaren Führungsnocken 8 auf, der mit einer Führungskontur 13 des Schalthebels 3 in Eingriff steht.

Der Schalthebel 3 ist um eine zweite Achse 9 schwenkbeweglich in zum Beispiel einem Gehäuse eines Kraftfahrzeugschlosses aufgenommen. Am Schalthebel 3 wiederum ist ein erster Zylinderstift 10 befestigt, der mit einem ersten Federschenkel 11 einer als Mitte-Null-Feder ausgebildeten Schenkelfeder 12 in der dargestellten Position in Eingriff steht. Ein zweiter Federschenkel 11' der Schenkelfeder 12 steht in Eingriff mit einem ortsfesten zweiten Zylinderstift 17. Mittels des ersten Federschenkels 11 ist eine Kraft F in den Schalthebel 3 einleitbar. Diese Kraft F wird mittels des Schalthebels 3 als Kraft F1 auf den Führungsnocken 8 des Antriebshebels 2 übertragen. Wie deutlich in der FIG. 1 zu erkennen ist, wirkt die Kraft F1 des Schalthebels 3 an der Rotorwelle 5 vorbei, so dass einerseits ein Kraftvektor in Richtung der Rotorwelle 5 wirkt und ein geringerer Teil der Kraft F1 als Kraftvektor in Richtung des Anschlags 6 wirkt. Dieser geringere Teil der Kraft F1, der in Richtung des Anschlags 6 wirkt, stabilisiert die Lage des Antriebshebels 2 in der in der FIG. 1 dargestellten Position. Mittels der Kraft F1 aus dem Schalthebel 3 wird somit die Lage des Antriebshebels 2 gesichert. Tatsächlich sichert die Kraftkomponente der Kraft F1, die in Richtung des Anschlags 6 wirkt, den Antriebshebel 2 in seiner ersten Funktionsstellung.

Wird der Antriebshebel 2 mittels des elektromagnetischen Rotationsstellers 4 im Gegenuhrzeigersinn bewegt, so bewegt sich der Schalthebel 3 in Richtung des Pfeils P im Uhrzeigersinn. Dabei gleitet der Führungsnocken 8 an der Führungskontur 13 des Schalthebels 3 entlang und verstellt den Schalthebel. Durch den kontinuierlichen Eingriff zwischen dem Führungsnocken 8 und der Führungskontur 13 kann ein spielfreies Bewegen des Schalthebels gewährleistet werden und gleichzeitig wird ein geräuscharmes Bewegen erzielt. Nach einem Verstellen des Schalthebels 3 mittels des Antriebshebels 2 gelangt der Antriebshebel 2 über die in FIG. 2 gezeigte Mittelstellung, in der sich die Schenkelfeder 12 in ihrer Mitte-Null-Stellung befindet, gegen den Anschlag 7 und in seine zweite Funktionsstellung, wie in FIG. 3 gezeigt ist. Jeer Anschlag 6, 7 kann beispielsweise an einem Schlossgehäuse oder am elektromagnetischen Rotationssteller ausgebildet sein.

In der FIG. 4 ist der Stellantrieb 1 gemäß der FIG. 1 bis 3 im Zusammenspiel mit einem Kupplungshebel 14 wiedergegeben. Der Schalthebel 3 steht dabei in Wirkverbindung mit dem Kupplungshebel 14. Der Kupplungshebel 14 wiederum kann mit einem Betätigungshebel 15, der beispielsweise ein Außenbetätigungshebel sein kann, in Eingriff gebracht werden. Durch ein Betätigen des Betätigungshebels 15 in Richtung des Pfeils P1 ist der Kupplungshebel 14 verschiebbar, wodurch wiederum zum Beispiel eine Sperrklinke 16 auslenkbar sein kann. Im Falle der eingelegten Kupplung, wie sie in der FIG. 4 wiedergegeben ist, kann somit durch ein Betätigen des Betätigungshebels 15 ein Gesperre entsperrt werden.

Wird nun mittels des Antriebshebels 2 der Schalthebel 3 im Uhrzeigersinn verschwenkt, so gelangt der Kupplungshebel 14 in Richtung des Pfeils P außer Eingriff mit dem Betätigungshebel 15. Die Betätigungskette aus Betätigungshebel 15, Kupplungshebel 14 und Sperrklinke 16 ist unterbrochen. Ein Betätigen der Sperrklinke 16 wird unterbunden, so dass ein verriegelter Zustand mittels des Schalthebels 3 einstellbar ist. Es wird darauf hingewiesen, dass hier lediglich ein Ausführungsbeispiel eines Einsatzes eines Stellantriebs 1 wiedergegeben ist. Selbstverständlich können auch linear verstellbare Stellelemente mittels des Schalthebels 3 bewegt werden. Durch den Einsatz der erfindungsgemäßen Anordnung zwischen Antriebshebel 2 und Schalthebel 3 kann ein sicheres Positionieren eines Schalthebels 3 realisiert werden, ohne dass eine Dauerbestromung des elektromagnetischen Rotationsstellers 4 erforderlich ist..

### BEZUGSZEICHENLISTE

- 1: Stellantrieb
- 2: Antriebshebel
- 3: Schalthebel
- 4: elektromagnetischer Rotationssteller
- 5: Rotorwelle
- 6,7: Anschlag
- 8: Führungsnocken
- 9/9': zweite/erste Achse für 3/2
- 10: erster Zylinderstift
- 11/11': erster/zweiter Federschenkel
- 12: Schenkelfeder
- 13: Führungskontur
- 14: Kupplungshebel
- 15: Betätigungshebel
- 16: Sperrklinke
- 17: zweiter Zylinderstift
- F/F1: Kraft von 11/3
- P, P1: Pfeil

## Patentansprüche

1. Stellantrieb (1) für kraftfahrzeugtechnische Anwendungen, insbesondere für ein Kraftfahrzeugschloss mit diesem Stellantrieb (1), zur Realisierung verschiedener Funktionsstellungen, aufweisend
• einen elektromagnetischen Rotationssteller (4) mit einem Rotor (5) und einem Ständer, insbesondere einem Spulenträger;
• einen Antriebshebel (2), wobei der Antriebshebel (2) mittels des Rotationsstellers (4) in verschiedene Funktionsstellungen bringbar ist;
• einen Schalthebel (3);
wobei
• der Antriebshebel (2) mit dem Schalthebel (3) derart zusammenwirkt, dass nach einem Erreichen einer der Funktionsstellungen mittels des Schalthebels (3) ein Moment in den Antriebshebel (2) einleitbar ist;
• der Antriebshebel (2) um eine erste Achse (9') schwenkbeweglich aufgenommen ist;
• der Schalthebel (3) um eine zweite Achse (9) schwenkbar gelagert ist;
wobei
• der Schalthebel (3) zum Verrasten des Antriebshebels (2) in der Funktionsstellung ausgebildet ist;
• das mittels des Schalthebels (3) in den Antriebshebel (2) einleitbare Moment die Funktionsstellung stabilisiert **dadurch gekennzeichnet, dass**
• der Antriebshebel (2) einen Führungsnocken (8) aufweist;
• der Schalthebel (3) eine Führungskontur (13) aufweist;
• der Führungsnocken (8) mit der Führungskontur (13) in Eingriff steht;
• wobei der Antriebshebel (2) in der Funktionsstellung mit einem Anschlag (6, 7) zusammenwirkt.

2. Stellelement (1) nach Anspruch 1, **dadurch gekennzeichnet, dass** der Antriebshebel (2) schwenkbar am Rotationssteller (4) aufnehmbar ist.

3. Stellelement (1) nach Anspruch 1 oder 2, **dadurch gekennzeichnet, dass** das stabilisierende Moment zumindest teilweise in Richtung des Anschlags (6, 7) wirkt.

4. Stellantrieb (1) nach einem der vorigen Ansprüche, **dadurch gekennzeichnet, dass** der Schalthebel (3) mittels des Antriebshebels (2) positionierbar ist.

5. Stellantrieb (1) nach einem der vorigen Ansprüche, **dadurch gekennzeichnet, dass**
• der Schalthebel (3) mit einem Federelement (12) zusammenwirkt,
• mittels des Federelementes (12) eine Kraft (F, F1) in den Antriebshebel (2) einleitbar ist.

6. Stellantrieb (1) nach einem der vorigen Ansprüche, **dadurch gekennzeichnet, dass** das Federelement (12) eine Mitte-Null-Feder ist.

7. Stellantrieb (1) nach einem der vorigen Ansprüche, **dadurch gekennzeichnet, dass**
• der Stellantrieb (1) Teil eines Kraftfahrzeugschlosses ist,
• der Schalthebel (3) mit einem weiteren Hebel, insbesondere einem Kupplungshebel (14), in Eingriff bringbar ist.

8. Stellantrieb (1) nach einem der vorigen Ansprüche, **dadurch gekennzeichnet, dass**
• der Antriebshebel (2) zumindest bereichsweise eine, insbesondere zylindrische, Kontur aufweist,
• der Schalthebel (3) mittels der Kontur zumindest bereichsweise führbar ist.

## Claims

1. Control drive (1) for motor vehicle applications, in particular for a motor vehicle latch having said control drive (1), for realizing various functional positions, comprising
• an electromagnetic rotary actuator (4) having a rotor (5) and a stator, in particular a coil carrier;
• a drive lever (2), it being possible to bring the drive lever (2) into various functional positions by means of the rotary actuator (4);
• a switch lever (3);
wherein
• the drive lever (2) interacts with the switch lever (3) in such a way that, after one of the functional positions has been reached by means of the switch lever (3), a torque can be introduced into the drive lever (2);
• the drive lever (2) is accommodated so as to be pivotable about a first axis (9');
• the switch lever (3) is mounted so as to be pivotable about a second axis (9);
wherein
• the switch lever (3) is designed to ratchet the drive lever (2) in the functional position;
• the torque that can be introduced into the drive lever (2) by means of the switch lever (3) stabilizes the functional position, **characterized in that**
• the drive lever (2) has a guide cam (8);
• the switch lever (3) has a guide contour (13);
• the guide cam (8) is in engagement with the guide contour (13);
• the drive lever (2) interacting with a stop (6, 7) in the functional position,

2. Control member (1) according to claim 1, **characterized in that** the drive lever (2) can be pivotably accommodated on the rotary actuator (4).

3. Control member (1) according to either claim 1 or claim 2, **characterized in that** the stabilizing torque acts in the direction of the stop (6, 7) at least in part.

4. Control drive (1) according to any of the preceding claims, **characterized in that** the switch lever (3) can be positioned by means of the drive lever (2).

5. Control drive (1) according to any of the preceding claims, **characterized in that**
• the switch lever (3) interacts with a spring element (12),
• a force (F, F1) can be introduced into the drive lever (2) by means of the spring element (12).

6. Control drive (1) according to any of the preceding claims, **characterized in that** the spring element (12) is a center-zero spring.

7. Control drive (1) according to any of the preceding claims, **characterized in that**
• the control drive (1) is part of a motor vehicle latch,
• the switch lever (3) can be brought into engagement with a further lever, in particular a clutch lever (14).

8. Control drive (1) according to any of the preceding claims, **characterized in that**
• the drive lever (2) has an in particular cylindrical contour at least in regions,
• the switch lever (3) can be guided by means of the contour at least in regions.

## Revendications

1. Mécanisme de commande (1) destiné à des applications dans le domaine technique de l'automobile, en particulier destiné à une serrure de véhicule automobile comportant ce mécanisme de commande (1) afin de réaliser diverses positions fonctionnelles, présentant
• un moyen de réglage de rotation électromagnétique (4) comportant un rotor (5) et un stator, en particulier un support de bobine ;
• un levier d'entraînement (2), le levier d'entraînement (2) pouvant être amené dans diverses positions fonctionnelles à l'aide du moyen de réglage de rotation (4) ;
• un levier de commutation (3) ;
dans lequel
• le levier d'entraînement (2) coopère avec le levier de commutation (3) de telle sorte que, après que l'une des positions fonctionnelles a été atteinte au moyen du levier de commutation (3), un couple peut être introduit dans le levier de vitesses (2) ;
• le levier d'entraînement (2) est reçu de manière à pouvoir pivoter autour d'un premier axe (9') ;
• le levier de commutation (3) est monté pivotant autour d'un second axe (9) ;
dans lequel
• le levier de commutation (3) est conçu pour encliqueter le levier d'entraînement (2) dans la position fonctionnelle ;
• le couple qui peut être introduit dans le levier d'entraînement (2) au moyen du levier de commutation (3) stabilise la position fonctionnelle,
**caractérisé en ce que**
• le levier d'entraînement (2) présente une came de guidage (8) ;
• le levier de commutation (3) présente un contour de guidage (13) ;
• la came de guidage (8) est en prise avec le contour de guidage (13) ;
• le levier d'entraînement (2) coopérant, dans la position fonctionnelle, avec une butée (6,7).

2. Élément de commande (1) selon la revendication 1, **caractérisé en ce que** le levier d'entraînement (2) peut être reçu pivotant sur le moyen de réglage de rotation (4).

3. Élément de commande (1) selon la revendication 1 ou 2, **caractérisé en ce que** le couple de stabilisation agit au moins partiellement en direction de la butée (6, 7).

4. Mécanisme de commande (1) selon l'une des revendications précédentes, **caractérisé en ce que** le levier de commutation (3) peut être positionné au moyen du levier d'entraînement (2).

5. Mécanisme de commande (1) selon l'une des revendications précédentes, **caractérisé en ce que**
• le levier de commutation (3) coopère avec un élément de ressort (12),
• une force (F, F1) peut être introduite dans le levier d'entraînement (2) au moyen de l'élément de ressort (12).

6. Mécanisme de commande (1) selon l'une des revendications précédentes, **caractérisé en ce que** l'élément de ressort (12) est un ressort à centre zéro.

7. Mécanisme de commande (1) selon l'une des revendications précédentes, **caractérisé en ce que**
• le mécanisme de commande (1) fait partie d'une serrure de véhicule automobile,
• le levier de commutation (3) peut être mis en prise avec un autre levier, en particulier un levier d'embrayage (14).

8. Mécanisme de commande (1) selon l'une des revendications précédentes, **caractérisé en ce que**
• le levier d'entraînement (2) présente, au moins dans certaines zones, un contour, en particulier cylindrique,
• le levier de commutation (3) peut être guidé au moins dans certaines zones au moyen du contour.
